# EUROPÄISCHE PATENTANMELDUNG

(11) **EP 3 422 500 A1**
(43) Veröffentlichungstag der Anmeldung: **02.01.2019**
(21) Anmeldenummer: 18000485.5
(22) Anmeldetag: 30.05.2018
(51) Int. Cl.: H02B 1/50, H02G 9/10

(54) **NETZTRENNSTELLE ZUM TRENNEN ELEKTRISCHER EINRICHTUNGEN VON EINEM STROMVERSORGUNGSNETZ IM UNTERFLURBEREICH**

(30) Priorität: 30.06.2017 DE 102017006189
(71) Anmelder: Langmatz GmbH, 82467 Garmisch-Partenkirchen (DE)
(72) Erfinder: Hutter, Michael, 82497 Unterammergau (DE); Wanner, Ulrich, 86507 Oberottmarshausen (DE)
(74) Vertreter: Flosdorff, Jürgen

(57) **Zusammenfassung**

Die Netztrennstelle zum Trennen elektrischer Einrichtungen vom Stromversorgungsnetz ist dadurch gekennzeichnet, dass die Netztrennstelle unterflur in dem Boden angeordnet ist, wobei sie eine luftdichte Tauchglocke (5) aufweist, die an Wänden eines in den Boden eingelassenen Gehäuses (1) schwenkbar befestigt ist und Einbauten gegen Überflutung schützt. An der Tauchglocke (5) ist ein Trittschutzblech (13) angelenkt, das im herausgeschwenkten Zustand der Tauchglocke (5) auf einem Vorsprung einer Gehäusewand aufliegt.

## Beschreibung

Die Erfindung betrifft eine Netztrennstelle zum Trennen elektrischer Einrichtungen von einem Netzbetreiber wie einem öffentlichen Stromversorgungsnetz. Die Netztrennstelle enthält Netztrenneinheiten wie z.B. Schalter oder Sicherungen, durch die beispielsweise Hausanschlüsse oder eine Straßenbeleuchtung vom Stromnetz getrennt werden können.

Bisher sind Netztrennstellen der betrachteten Art in schrankähnlichen Gehäusen untergebracht, die z.B. am Straßenrand auf dem Boden aufgestellt sind. Diese Netztrennschränke werden häufig beschädigt beispielsweise durch Vandalismus oder durch Aufprall eines Kraftfahrzeugs, so dass sie mit einem erheblichen Kostenaufwand ersetzt werden müssen. Außerdem erfordert ihre Aufstellung ein vorangehendes Genehmigungsverfahren, das zeitraubend sein kann und nicht immer zu dem gewünschten Ergebnis führt.

Der vorliegenden Erfindung liegt die Aufgabe zugrunde, eine Netztrennstelle anzugeben, bei der die obigen Nachteile vermieden sind.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass die Netztrennstelle unterflur in den Boden eingebaut ist. Sie ist von einem abnehmbaren oder schwenkbaren Deckel überdeckt, der im wesentlichen mit der Oberfläche des umgebenden Bereichs fluchtet. Damit kann die erfindungsgemäße Netztrennstelle nicht von außen beschädigt werden, und sie beeinträchtigt auch nicht das Erscheinungsbild an der Einbaustelle, wobei auch das Erfordernis eines Genehmigungsverfahrens entfällt, da es keine Bedenken hinsichtlich des optischen Erscheinungsbildes gibt.

Mit besonderem Vorteil ist des weiteren vorgesehen, dass die Netztrennstelle eine luftdichte Tauchglocke aufweist, die an Wänden eines in den Boden eingelassenen Gehäuses schwenkbar befestigt ist. Die luftdichte Tauchglocke ist in der Ausgangsstellung horizontal in dem Gehäuse angeordnet, so dass sich die offene Seite der Tauchglocke unten befindet. Die Netztrenneinheiten wie Schalter oder Sicherungen befinden sich oberhalb der offenen Seite der Tauchglocke, wobei sie entweder an der oberen, geschlossenen Wand der Tauchglocke oder in einem kleineren Innengehäuse befestigt sein können, das seinerseits an der geschlossenen Glockenwand angebracht ist.

Die Anordnung der Netztrenneinheiten in der Tauchglocke hat zur Folge, dass sie auch bei Überflutung der Netztrennstelle vor der Berührung mit Wasser geschützt sind, da dieses nicht von unten bis zu den Netztrenneinheiten in die Tauchglocke eindringen kann.

Bei geschlossenem Deckel ist die Tauchglocke zudem in der horizontalen Lage fixiert, so dass sie bei Überflutung nicht aufgeschwemmt werden kann. Hierzu steht von der oberen Wand der Tauchglocke ein Handgriff nach oben ab, der bei geschlossenem Deckel an dessen Unterseite anliegt. Dieser Handgriff befindet sich an dem der gelenkigen Lagerung der Tauchglocke gegenüber liegenden Endabschnitt, so dass die Tauchglocke bei abgenommenem Deckel mit Hilfe des Handgriffs leicht nach oben verschwenkt werden kann. Wenn die Netztrenneinheiten betätigt werden sollen, wird die Tauchglocke soweit verschwenkt, dass der Handgriff auf dem die Netztrennstelle umgebenden Bereich aufliegt, wodurch die offene Stellung der Tauchglocke fixiert ist. Der Schwenkwinkel der Tauchglocke beträgt damit etwas weniger als 180°.

An der von dem Handgriff am weitesten entfernten Seitenwand der Tauchglocke steht ein Vorsprung seitlich ab, der beispielsweise die Form einer Leiste hat und der in der horizontalen Anordnung der Tauchglocke an der benachbarten Gehäusewand anliegt. Bei geschlossenem Deckel fixiert dieser Vorsprung zusammen mit dem Handgriff die unbewegliche horizontale Lage der Tauchglocke in dem Gehäuse.

Die Arbeit an der aus dem Gehäuse heraus geschwenkten Tauchglocke wird dadurch erleichtert, dass an der Tauchglocke ein Trittschutzblech angelenkt ist, das im herausgeschwenkten Zustand der Tauchglocke auf einem bevorzugt umlaufenden Vorsprung an der Innenseite des Gehäuses aufliegt. Das Trittschutzblech ist in dieser Lage so stabil gehalten, dass es von einem Monteur belastet werden kann, so dass dieser bequem die notwendigen Arbeiten an den Netztrenneinheiten durchführen kann. Das Trittschutzblech besteht vorzugsweise aus einem Blech mit 4 mm Dicke und ist damit trittfest.

In näheren Einzelheiten wird hierzu vorgeschlagen, dass das Trittschutzblech zwei im rechten Winkel abstehende Laschen aufweist, die bevorzugt aus der Ebene des Trittschutzblechs frei geschnitten und aufgebogen sind, wobei durch diese Laschen eine an der Tauchglocke befestigte Stange hindurch geführt ist. Um diese Stange ist das Trittschutzblech gelenkig gelagert. In der horizontalen Lage der Tauchglocke liegen diese Laschen vorzugsweise an der zugewandten Gehäusewand an, wobei das Trittschutzblech in Anlage an den Rand der offenen Seite der Tauchglocke verschwenkt ist und gemeinsam mit der Tauchglocke in der horizontalen Lage gehalten ist. Mit großem Vorteil wird ferner vorgeschlagen, dass die Tauchglocke ein Kunststoff-Spritzgussteil ist, das vorzugsweise einstückig mit dem Handgriff und dem seitlichen Vorsprung ausgebildet ist.

Die Erfindung sieht außerdem vor, dass die erfindungsgemäße Netztrennstelle für Ladestationen von Elektrofahrzeugen verwendet wird. Diese Ladestationen haben üblicherweise eine schlanke, optisch ansprechende Form, wobei ihr Erscheinungsbild durch einen oberirdisch aufgestellten Netztrennschrank beeinträchtigt wäre. Dies ist bei der erfindungsgemäßen unterflur in den Boden angeordneten Netztrennstelle nicht der Fall.

Weitere Einzelheiten der Erfindung ergeben sich aus der nachfolgenden Beschreibung einer bevorzugten Ausführungsform der Netztrennstelle. Dabei zeigen:
- Figur 1: eine Netztrennstelle mit geschlossenem Deckel;
- Figur 2: die Netztrennstelle mit abgenommenem Deckel;
- Figur 3: die Netztrennstelle mit heraus geschwenkter Tauchglocke;
- Figur 4: die Netztrennstelle gemäß Figur 3 mit Verkabelung der Netztrenneinheiten;

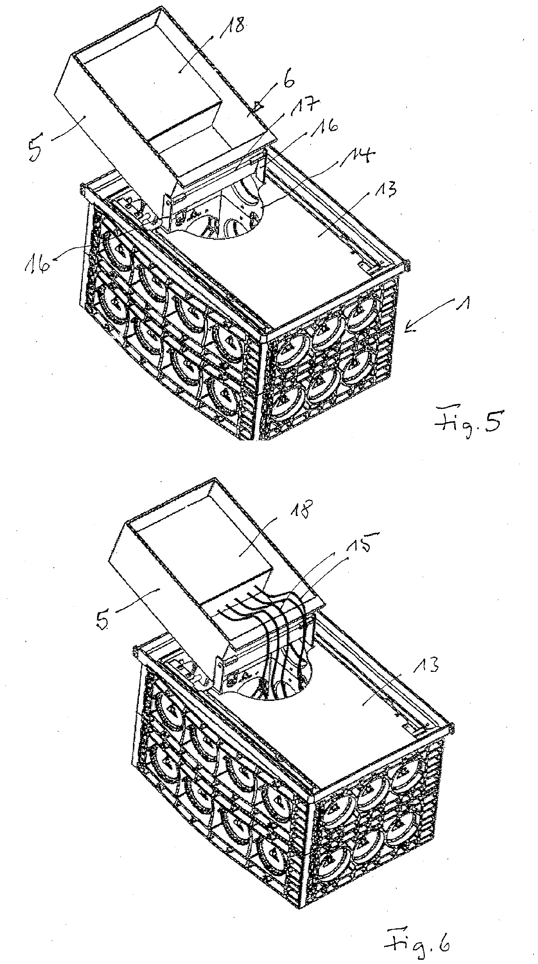

- Figur 5: die Netztrennstelle, bei der ein Trittschutzblech benutzbar ist;
- Figur 6: eine Darstellung ähnlich Figur 5 mit Verkabelung;
- Figur 7: einen Vertikalschnitt durch die Netztrennstelle in Einbaulage mit geschlossenem Deckel;
- Figur 8: die Netztrennstelle gemäß Figur 7 mit heraus geschwenkter Tauchglocke.

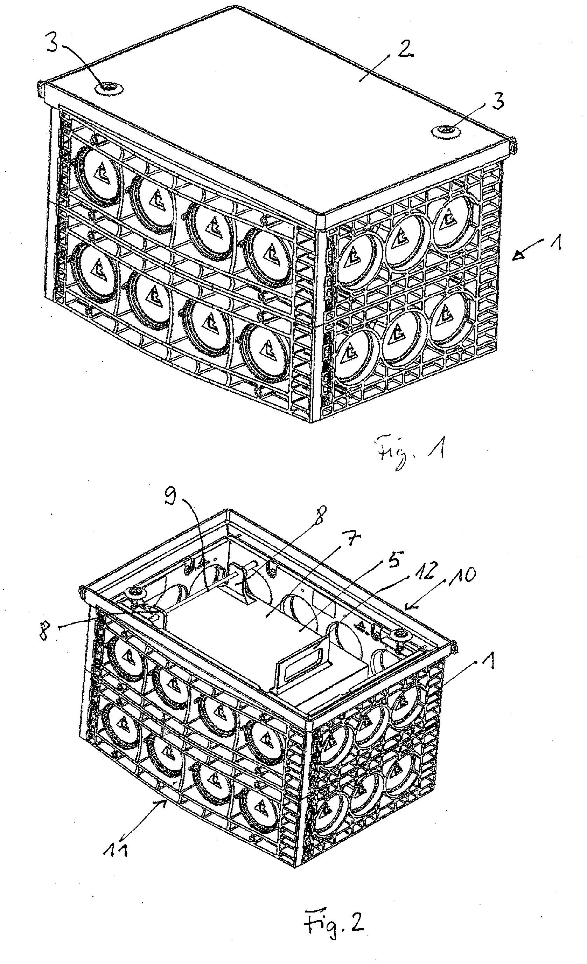

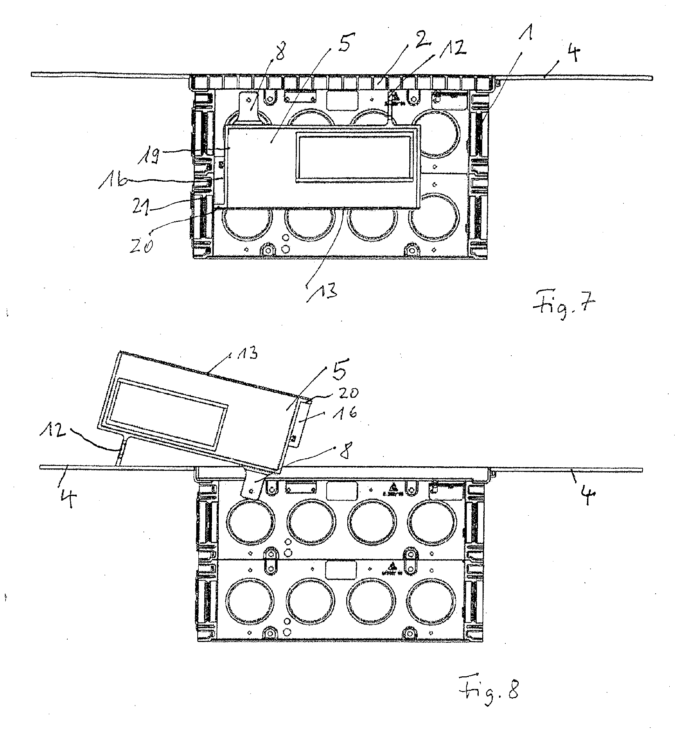

Die Figuren zeigen weitgehend schematisch eine Netztrennstelle teilweise in unterschiedlichen Maßstäben. Die Netztrennstelle enthält ein Gehäuse 1, das in der bevorzugten Ausführungsform durch einen Kunststoff-Schacht gebildet ist. In der Darstellung der Figur 1 ist das Gehäuse 1 durch einen oberen Deckel 2 verschlossen, der mit Spezialschrauben 3 an dem Gehäuse 1 befestigt ist. Der Deckel 2 besteht vorzugsweise aus Kunststoff und ist so stabil, dass er befahrbar ist. Aus Figur 7 ist zu ersehen, dass der Deckel 2 bündig mit der Oberfläche 4 des Bodens verläuft, in den das Gehäuse 1 eingelassen ist.

Die nachfolgenden Figuren zeigen, dass in dem Gehäuse 1 eine Tauchglocke 5 angeordnet ist, die schwenkbar in dem Gehäuse 1 befestigt ist. Die Tauchglocke 5 ist luftdicht und besteht vorzugsweise aus Kunststoff. Die offene Seite 6 der Tauchglocke 5 befindet sich in der horizontalen Lage der Tauchglocke 5 an ihrer Unterseite.

An der oberen Wand 7 der Tauchglocke 5 sind zwei einander gegenüber liegende Laschen 8 angeformt, durch die eine Gelenkstange 9 verläuft, die an den gegenüber liegenden Längsseiten 10, 11 des Gehäuses 1 befestigt ist. Die Haube 5 ist damit um die Gelenkstange 9 schwenkbar.

An dem gegenüber liegenden Endbereich der oberen Wand 7 ist ein Handgriff 12 angeformt, mit dem die Tauchglocke 5 aus dem Gehäuse 1 heraus schwenkbar ist. Figur 8 zeigt, dass in der heraus geschwenkten Endlage der Tauchglocke 5 der Handgriff 12 auf der Oberseite des die Netztrennstelle umgebenden Bodens aufliegt.

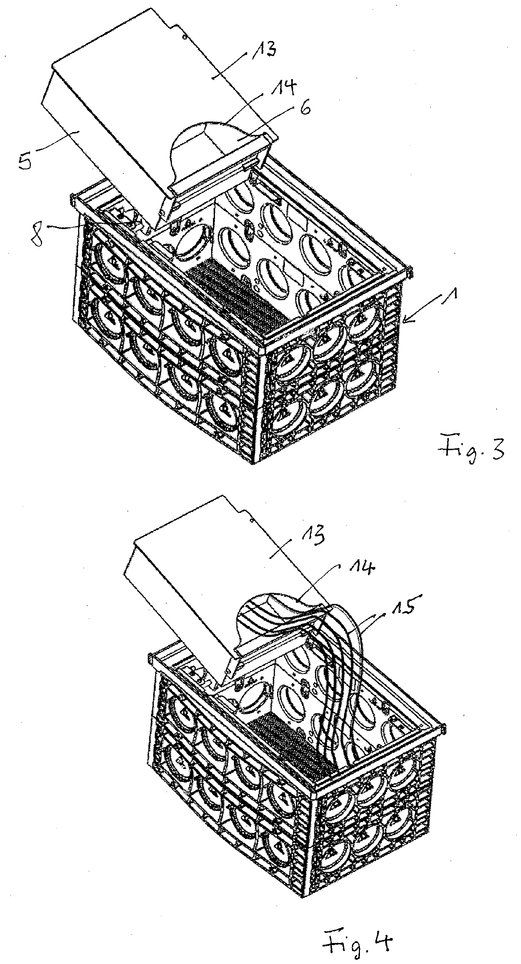

Aus Figur 3 ist zu ersehen, dass die offene Seite 6 der Haube 5 von einem Trittschutzblech 13 überdeckt sein kann, das gegenüber der Tauchglocke 5 in die Gebrauchslage schwenkbar ist, in der das Trittblech 13 auf streifenförmigen Vorsprüngen des Gehäuses 1 aufliegt. In dieser Lage kann ein Monteur sich auf das Trittschutzblech 13 stellen oder knien, um die in den Zeichnungen nicht dargestellten Netztrenneinheiten zu betätigen.

Das Trittschutzblech 13 enthält einen gerundeten Ausschnitt 14, durch den zu den Netztrenneinheiten führende Kabel 15 hindurch geführt werden können.

Aus dem Trittschutzblech 13 sind an dem in den Figuren linken Rand zwei einander gegenüber liegende Laschen 16 frei geschnitten und rechtwinklig aufgebogen. Durch diese Laschen 16 ist am oberen Endbereich eine Gelenkstange 17 hindurch geführt, die an der Tauchglocke 5 befestigt ist. Das Trittschutzblech 13 ist um dieses Gelenk schwenkbar.

In der Tauchglocke 5 ist ein kleineres Gehäuse 18 befestigt, in dem die nicht dargestellten Netztrenneinheiten angeordnet sind.

Die Figuren 7 und 8 zeigen im Gegensatz zu den vorangehenden Figuren den in den Boden unterflur eingebauten Zustand der Netztrennstelle. In Figur 7 befindet sich die Tauchglocke 5 in einer horizontalen Lage, in der sie durch den Handgriff 12, der an der Unterseite des Deckels 2 anliegt, und durch einem von der linken Tauchglockenwand 19 abstehenden Vorsprung 20 gehalten ist, der an der linken Gehäusewand 21 anliegt. An dieser Gehäusewand 21 liegen auch die beiden mit dem Trittschutzblech 13 verbundenen Laschen 16 an, die damit das Trittschutzblech ebenfalls in waagerechter Ausrichtung halten.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Netztrennstelle zum Trennen elektrischer Einrichtungen vom Stromversorgungsnetz,
**dadurch gekennzeichnet,**
**dass** die Netztrennstelle unterflur in dem Boden angeordnet ist.

2. Netztrennstelle nach Anspruch 1,
**dadurch gekennzeichnet,**
**dass** die Netztrennstelle von einem abnehmbaren oder schwenkbaren Deckel (2) überdeckt ist, der im wesentlichen mit der Oberfläche (4) des umgebenden Bereichs fluchtet.

3. Netztrennstelle nach einem der Ansprüche 1 oder 2,
**dadurch gekennzeichnet,**
**dass** die Netztrennstelle eine luftdichte Tauchglocke (5) aufweist, die an Wänden eines in den Boden eingelassenen Gehäuses (1) schwenkbar befestigt ist und Einbauten gegen Überflutung schützt.

4. Netztrennstelle nach Anspruch 3,
**dadurch gekennzeichnet,**
**dass** von der oberen Wand (7) der Tauchglocke (5) ein Handgriff (12) nach oben absteht, der bei geschlossenem Deckel (2) an dessen Unterseite anliegt und ein Aufschwemmen der Tauchglocke (5) im Falle einer Überflutung der Netztrennstelle verhindert.

5. Netztrennstelle nach Anspruch 4,
**dadurch gekennzeichnet,**
**dass** an der von dem Handgriff (12) am weitesten entfernten Seitenwand (19) der Tauchglocke (5) ein Vorsprung (20) seitlich absteht, der in der horizontalen Anordnung der Tauchglocke (5) an der benachbarten Gehäusewand (21) anliegt und zusammen mit dem Handgriff (12) die horizontale Lage der Tauchglocke (5) bei geschlossenem Deckel (2) fixiert.

6. Netztrennstelle nach einem der Ansprüche 1 bis 5,
**dadurch gekennzeichnet,**
**dass** die Tauchglocke (5) in dem aus dem Gehäuse (1) herausgeschwenkten Zustand mit dem Handgriff (12) auf dem umgebenden Bereich aufliegt, wodurch die offene Stellung der Tauchglocke (5) fixiert ist.

7. Netztrennstelle nach einem der Ansprüche 1 bis 6,
**dadurch gekennzeichnet,**
**dass** an der Tauchglocke (5) ein Trittschutzblech (13) angelenkt ist, das im herausgeschwenkten Zustand der Tauchglocke (5) auf einem Vorsprung einer Gehäusewand aufliegt.

8. Netztrennstelle nach Anspruch 7,
**dadurch gekennzeichnet,**
**dass** das Trittschutzblech (13) zwei im rechten Winkel abstehende Laschen (16) aufweist, die an der Tauchglocke (5) angelenkt sind und in der horizontalen Lage der Tauchglocke (5) an der zugewandten Gehäusewand (21) anliegen und das Trittschutzblech (13) in einer im wesentlichen horizontalen Lage halten.

9. Netztrennstelle nach einem der Ansprüche 1 bis 8,
**dadurch gekennzeichnet,**
**dass** die Tauchglocke (5) ein Kunststoff-Spritzgussteil ist.

10. Verwendung der Netztrennstelle nach einem der Ansprüche 1 bis 9 vorzugsweise für Ladestationen von Elektrofahrzeugen.
